# EUROPEAN PATENT APPLICATION

(11) **EP 3 179 667 A1**
(43) Date of publication of application: **14.06.2017**
(21) Application number: 15776694.0
(22) Date of filing: 03.04.2015
(51) Int. Cl.: H04L 5/16

(54) **METHOD, MICRO BASE STATION, AND MACRO BASE STATION FOR ADJUSTING COMMUNICATIONS MODE**

(30) Priority: 27.08.2014 CN 201410427711
(71) Applicant: ZTE Corporation, Guangdong 518057 (CN)
(72) Inventor: LU, Zhaohua, Shenzhen Guangdong 518057 (CN); CHEN, Yijian, Shenzhen Guangdong 518057 (CN); YU, Guanghui, Shenzhen Guangdong 518057 (CN); LI, Yu Ngok, Shenzhen Guangdong 518057 (CN)
(74) Representative: Awapatent AB
(86) International application number: PCT/CN2015/075880
(87) International publication number: WO 2015/154644

(57) **Abstract**

Provided are a method, a micro base station, and a macro base station for adjusting a communication mode, the method including: a first communication node sending duplex mode adjustment information to a second communication node, herein the second communication node at least supports a full-duplex mode. According to the technical solution provided by the present invention, by sending the duplex mode adjustment information to the second communication node, the influence on the system flexibility for a reason that the second communication node enables a full-duplex mode at all times is avoided, the power consumption caused by the full-duplex mode to the second communication node is reduced and the burden of subordinate terminals of the second communication node is decreased.

## Description

### Technical Field

This text relates to a technology for adjusting communication mode in a long-term evolution technology of a wireless communication system, in particular to a method, a micro base station and a macro base station for adjusting a communication mode.

### Background

With the application development of intelligent terminals such as smart phones and tablet computers, for example, cloud computing, Internet of Things, mobile phone video calls and conferences, online games, online music, picture downloading and the like drive wireless communication network users to increase greatly, resulting that wireless data services increase explosively. As predicted, wireless data services will increase by 1000 times in future ten years and will averagely and yearly increase by 2 times.

In order to adapt to the increase of wireless data services, at present wireless communication network capacity is improved mainly by increasing spectrum bandwidth, enhancing traffic offload, improving network density, improving spectrum efficiency and the like. By improving the wireless communication network capacity, the quality of service of wireless data services under normal environments can be improved. An ultra-dense network is a key technology in a 5G mobile communication system, herein micro base stations (base stations with relatively smaller transmitting power, also called small base stations such as femto cells, micro cells, small cells and relay stations) are deployed in a large scale. In consideration of factors such as costs and construction environments, it is very difficult to realize all backhaul links between them and an upper layer network element or all fronthaul links between base stations through optical fibers or a wired mode. As a result, a wireless transmission mode needs to be considered to realize backhaul or fronthaul links. Although wireless transmission has advantages of short time delay and flexible deployment, precious wireless spectrum resources need to be occupied. Especially during realization based on an in-band signal transmission mode, same wireless bands are used for communication between a micro base station and an upper network element and between the micro base station and subordinate terminals, wireless bands are occupied by them through a time-division mode, and consequently the capacity of the entire system is greatly reduced. For example, a macro base station and a micro base station realize in-band mode backhaul through a wireless link, and the micro base station sends data to subordinate terminals and simultaneously receives data sent by the macro base station thereto.

Co-frequency co-time full-duplex is a novel duplex technology which is put forward in recent years, a core thereof is to realize co-frequency interface elimination in a full-duplex system through technologies such as high-efficiency fine self-interference and mutual interference elimination, so as to guarantee normal signal receiving and realize co-frequency co-time receiving and transmission. As compared with the traditional frequency-division duplex mode or time-division duplex mode, a co-frequency co-time duplex mode (hereunder called full-duplex mode) can decrease frequency waste by half, and is a new mobile technology which is very valuable in future. By introducing the full-duplex mode to a micro base station side, the utilization rate of wireless spectrum resources can be improved. However, if a micro base station enables the full-duplex mode at all times, a lack for flexibility will be caused in a working process of a system. Aiming at the change of network load, the working performance thereof cannot be fully exerted at all by enabling the full-duplex mode, contrarily unnecessary computing complexity and power consumption will be caused to the micro base station and simultaneously the burden of subordinate terminals of the micro base station will be increased. For example, in the full-duplex mode, the micro base station needs to send data to subordinate terminals and simultaneously needs to try to decode downlink data sent by a macro base station to the micro base station, and consequently unnecessary computing complexity is caused to the micro base station. When the network load is relatively small, the micro base station can satisfy the overall performance requirement of the system without enabling the full-duplex mode. At this moment, if the micro base station is in the full-duplex mode, the micro base station is caused to send data to subordinate terminals thereof at the same time when the micro base station tries to receive data sent by other network nodes, but actually other network nodes do not send any data to the micro base station, and consequently unnecessary power consumption is caused to the micro base station.

### Summary of the Invention

The technical problem to be solved by the present invention is to provide a method for adjusting a communication node, a micro base station and a macro base station, so as to adjust a duplex mode of the micro base station, reduce unnecessary power consumption of the micro base station and decrease the burden of subordinate terminals of the micro base station.

In order to achieve the purpose of the present invention, the following technical solution is adopted:

A method for adjusting a communication mode includes:
a first communication node sending duplex mode adjustment information to a second communication node,
herein the second communication node at least supports a full-duplex mode.

Alternatively, the step of the first communication node sending the duplex mode adjustment information to the second communication node includes:
the first communication sending the duplex mode adjustment information to the second communication node according to a duplex mode supported by the second communication node, such that the second communication node performs communication mode adjustment according to the received duplex mode adjustment information.

Alternatively, before the step of the first communication node sending the duplex mode adjustment information to the second communication node, the method further includes:
the second communication node notifying the first communication node about information about the duplex mode supported by the second communication node or information related to the duplex mode supported by the second communication node.

Alternatively, before the step of the first communication node sending the duplex mode adjustment information to the second communication node, the method further includes:
the first communication node acquiring network load or channel state information; or
the first communication node receiving duplex mode adjustment request information sent by the second communication node.

Alternatively, if the first communication node acquires the network load or channel state information, the step of the first communication node sending the duplex mode adjustment information to the second communication node includes:
if a network capacity acquired by the first communication node satisfies a demand or the channel state information does not satisfy a channel quality requirement, the first communication node sending duplex mode adjustment information of disabling a full-duplex mode to the second communication node; and
if the network capacity acquired by the first communication node does not satisfy the demand, the first communication node sending duplex mode adjustment information of enabling the full-duplex mode to the second communication node.

Alternatively, if the second communication node sends duplex mode adjustment request information to the first communication node, the step of the first communication node sending the duplex mode adjustment information to the second communication node includes:
the second communication node sending the duplex mode adjustment request information to the first communication node, and the first communication node determining whether to send the duplex mode adjustment information to the second communication node according to a network situation.

Alternatively, the information related to the duplex mode supported by the second communication node includes:
bandwidth information, and/or cache information, and/or maximum rate information and/or version information.

Alternatively, the duplex mode adjustment information includes:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

Alternatively, the duplex mode adjustment information includes: enabling/disabling the full-duplex mode,
herein enabling/disabling the full-duplex mode includes: enabling/disabling the full-duplex mode on partial resources.

Alternatively, the duplex mode adjustment information includes: indicating a working time-frequency resource of the full-duplex mode of the second communication node,
herein the working time-frequency resource includes: location of working time-frequency resource and/or period of working time-frequency.

Alternatively, the duplex mode adjustment information includes: indicating a sub-working mode of the full-duplex mode supported by the second communication node,
herein the sub-working mode includes:
the second communication node receiving data sent by the first communication node and simultaneously sending data to a third communication node; or
the second communication node receiving data sent by a third communication node and simultaneously sending data to the first communication node,
herein the third communication node is a node which establishes a connection with the second communication node.

A method for adjusting a communication mode includes:
a second communication node receiving duplex mode adjustment information sent by a first communication node; and
the second communication node performing communication mode adjustment according to the received duplex mode adjustment information,
herein the second communication node supports a full-duplex mode.

Alternatively, before the step of the second communication node receiving the duplex mode adjustment information sent by the first communication node, the method further includes: the second communication node sending information about the duplex mode supported by the second communication node or information related to the duplex mode supported by the second communication node to the first communication node.

Alternatively, before the step of the second communication node receiving the duplex mode adjustment information sent by the first communication node, the method further includes:
the second communication node sending duplex mode adjustment request information to the first communication node.

Alternatively, the method further includes: the second communication node receiving duplex mode adjustment information of disabling a full-duplex mode or duplex mode adjustment information of enabling the full-duplex mode, which is sent by the first communication node.

Alternatively, the method further includes: the first communication node determining whether to send the duplex mode adjustment information to the second communication node according to the received duplex mode adjustment request information and a network situation.

Alternatively, the information related to the duplex mode supported by the second communication node includes: bandwidth information, and/or cache information, and/or maximum rate information and/or version information.

Alternatively, the duplex mode adjustment information includes:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

Alternatively, the duplex mode adjustment information includes: enabling/disabling the full-duplex mode,
herein enabling/disabling the full-duplex mode includes: enabling/disabling the full-duplex mode on partial resources.

Alternatively, the duplex mode adjustment information includes: indicating a working time-frequency resource of the full-duplex mode of the second communication node,
herein the working time-frequency resource includes: location of working time-frequency resource and/or period of working time-frequency.

Alternatively, the duplex mode adjustment information includes: indicating a sub-working mode of the full-duplex mode supported by the second communication node,
herein the sub-working mode includes:
the second communication node receiving data sent by the first communication node and simultaneously sending data to a third communication node; or
the second communication node receiving data sent by a third communication node and simultaneously sending data to the first communication node,
herein the third communication node is a node which establishes a connection with the second communication node.

A macro base station includes a first sending unit, herein,
the first sending unit is arranged to: send duplex mode adjustment information to a second communication node,
herein the second communication node at least supports a full-duplex mode.

Alternatively, the first sending unit is arranged to send the duplex mode adjustment information to the second communication node according to the following mode:
sending the duplex mode adjustment information to the second communication node according to a duplex mode supported by the second communication node, such that the second communication node performs communication mode adjustment according to the received duplex mode adjustment information.

Alternatively, the macro base station further includes an acquisition unit and a judgment unit, herein,
the acquisition unit is arranged to: acquire network load or channel state information; and
the judgment unit is arranged to: judge whether a network capacity and the channel state information acquired by the acquisition unit satisfy a demand or a channel quality requirement; if the acquired network capacity satisfies the demand or the channel state information does not satisfy the channel quality requirement, notify the first sending unit to send duplex mode adjustment information of disabling a full-duplex mode to the second communication node; and if the acquired network capacity does not satisfy the demand, notify the first sending unit to send duplex mode adjustment information of enabling the full-duplex mode to the second communication node.

Alternatively, the receiving unit is further arranged to: receive information about the duplex mode supported by the second communication node or information related to the duplex mode supported by the second communication node, which is sent by the second communication node.

Alternatively, the macro base station further comprises the receiving unit, further arranged to: receive duplex mode adjustment request information sent by the second communication node; and
the first sending unit is further arranged to: after the first receiving unit receives the duplex mode adjustment request information sent by the second communication node, determine whether to send the duplex mode adjustment information to the second communication node according to a network situation.

Alternatively, the duplex mode adjustment information includes:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

A micro base station includes a second receiving unit and an adjustment unit, herein,
the second receiving unit is arranged to: receive duplex mode adjustment information sent by a first communication node; and
the adjustment unit is arranged to: perform communication mode adjustment according to the duplex mode adjustment information received by the second receiving unit,
herein the duplex mode at least includes a full-duplex mode.

Alternatively, the micro base station further includes a second sending unit, herein,
the second sending unit is arranged to: send information about the duplex mode supported by the micro base station or information related to the duplex mode supported by the micro base station to the first communication node, such that the first communication node sends the duplex mode adjustment information to the micro base station according to the duplex mode supported by the micro base station.

Alternatively, the micro base station further includes an adjustment request unit, herein,
the adjustment request unit is arranged to: send duplex mode adjustment request information to the first communication node, such that the first communication node determines whether to send the duplex mode adjustment information to the micro base station according to the duplex mode supported by the micro base station.

As compared with the related art, the technical solution provided by the present invention includes: a first communication node sending duplex mode adjustment information to a second communication node, herein the second communication node at least supports a full-duplex mode. According to the technical solution provided by the present invention, by sending the duplex mode adjustment information to the second communication node, the influence on the system flexibility for a reason that the second communication node enables a full-duplex mode at all times is avoided, the power consumption caused by the full-duplex mode to the second communication node is reduced and the burden of subordinate terminals of the second communication node is decreased.

### Brief Description of Drawings

The drawings are used for providing further understanding about the technical solution of the present application, constitute a part of the description, and are used together with the embodiments of the present invention for explaining the technical solution of the present application instead of limiting the technical solution of the present application.
FIG. 1 illustrates a flowchart of a method for adjusting a communication mode provided by the embodiment of the present invention.
FIG. 2 illustrates a structural diagram of a macro base station provided by the embodiment of the present invention.
FIG. 3 illustrates a structural diagram of a micro base station provided by the embodiment of the present invention.
FIG. 4 illustrates a flowchart of methods provided by embodiment 1 to embodiment 4.
FIG. 5 illustrates a flowchart of methods provided by embodiment 5 to embodiment 9.
FIG. 6 illustrates a flowchart of a method provided by embodiment 10.
FIG. 7 illustrates a flowchart of methods provided by embodiment 11 to embodiment 19.
FIG. 8 illustrates a flowchart of a method provided by embodiment 20.

### Preferred Embodiments of the Invention

The embodiments of the present application will be described below in detail with reference to the drawings. It needs to be stated that the embodiments in the present application and the features in the embodiments may be mutually and freely combined under the situation of no conflict.

The embodiment of the present invention provides a method for adjusting a communication mode, including the following step that: a first communication node sends duplex mode adjustment information to a second communication node, herein the second communication node at least supports a full-duplex mode.

The method specifically includes the following step that:
the first communication sends the duplex mode adjustment information to the second communication node according to a duplex mode supported by the second communication node, such that the second communication node performs communication mode adjustment according to the received duplex mode adjustment information.

Before the first communication node sends the duplex mode adjustment information to the second communication node, the method further includes the following step that: the second communication node notifies the first communication node about information about the duplex mode supported by the second communication node or information related to the duplex mode supported by the second communication node.

Before the first communication node sends the duplex mode adjustment information to the second communication node, the method further includes the following step that:
the first communication node acquires network load or channel state information; or
the second communication node sends duplex mode adjustment request information to the first communication node.

If the first communication node acquires the network load or channel state information, the step that the first communication node sends the duplex mode adjustment information to the second communication node according to the duplex mode supported by the second communication node specifically includes the following operations that:
if a network capacity acquired by the first communication node satisfies a demand or the channel state information does not satisfy a channel quality requirement, the first communication node sends duplex mode adjustment information of disabling a full-duplex mode to the second communication node according to the duplex mode supported by the second communication node; and
if the network capacity acquired by the first communication node does not satisfy the demand, the first communication node sends duplex mode adjustment information of enabling the full-duplex mode to the second communication node according to the duplex mode supported by the second communication node.

If the second communication node sends duplex mode adjustment request information to the first communication node, the step that the first communication node sends the duplex mode adjustment information to the second communication node according to the duplex mode supported by the second communication node specifically includes the following operations that:
the second communication node sends the duplex mode adjustment request information to the first communication node, and the first communication node determines whether to send the duplex mode adjustment information to the second communication node according to a network situation. Generally, the network situation refers to service priority, network resource and channel transmission quality in a network. For example, when the network resource is limited, the full-duplex mode of subframes with a higher service priority is enabled according to the service priority.

It needs to be stated that whether the network capacity requirement and the channel quality requirement are satisfied and the contents which are judged according to the network situation are common technical means adopted by one skilled in the art, and thus are not repetitively described here.

If the second communication node notifies the first communication node about the information related to the duplex mode supported by the second communication node, the information related to the supported duplex mode at least includes:
bandwidth information, and/or cache information, and/or maximum rate information and/or version information.

Alternatively, the duplex mode adjustment information includes: enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

The duplex mode adjustment information includes: enabling/disabling the full-duplex mode,
herein enabling/disabling the full-duplex mode includes: enabling/disabling the full-duplex mode on partial resources.

The duplex mode adjustment information includes: indicating a working time-frequency resource of the full-duplex mode of the second communication node,
herein the working time-frequency resource includes: location of working time-frequency resource and/or period of working time-frequency.

The duplex mode adjustment information includes: indicating a sub-working mode of the full-duplex mode supported by the second communication node,
herein the sub-working mode includes: the second communication node receiving data sent by the first communication node and simultaneously sending data to a third communication node; or
the second communication node receiving data sent by a third communication node and simultaneously sending data to the first communication node.

The third communication node is a node which establishes a connection with the second communication node.

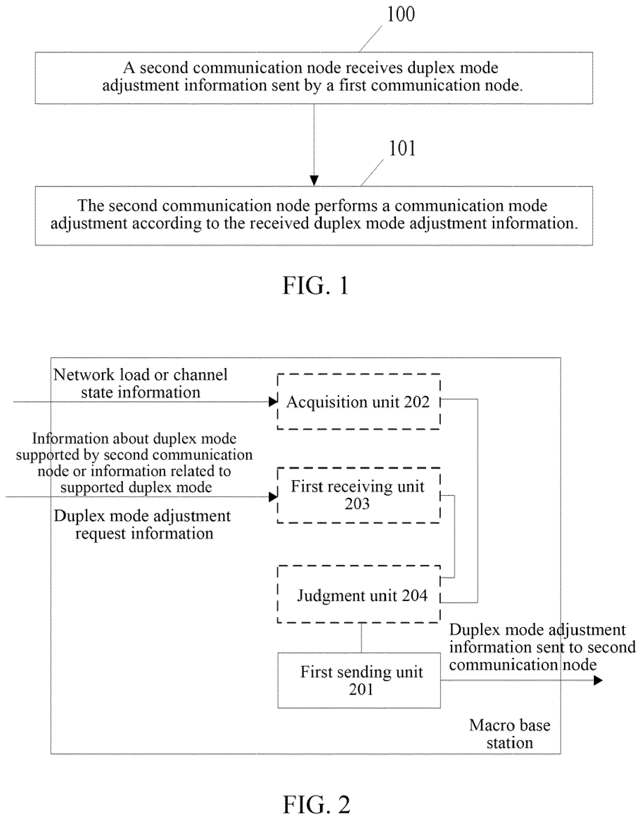

FIG. 1 illustrates a flowchart of a method for adjusting a communication mode provided by the embodiment of the present invention. As illustrated in FIG. 1, the method includes the following steps:
In step 100, a second communication node receives duplex mode adjustment information sent by a first communication node.

Herein, the second communication node supports a full-duplex mode.

In this step, the duplex mode adjustment information includes: enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

The duplex mode adjustment information includes: enabling/disabling the full-duplex mode,
herein enabling/disabling the full-duplex mode includes: enabling/disabling the full-duplex mode on partial resources.

The duplex mode adjustment information includes: indicating a working time-frequency resource of the full-duplex mode of the second communication node,
herein the working time-frequency resource includes: location of working time-frequency resource and/or period of working time-frequency.

The duplex mode adjustment information includes: indicating a sub-working mode of the full-duplex mode supported by the second communication node,
herein the sub-working mode includes: the second communication node receiving data sent by the first communication node and simultaneously sending data to a third communication node; or
the second communication node receiving data sent by a third communication node and simultaneously sending data to the first communication node. Herein, the third communication node is a node which establishes a connection with the second communication node.

In step 101, the second communication node performs communication mode adjustment according to the received duplex mode adjustment information.

Before that, the method provided by the embodiment of the present invention further includes the following step that: the second communication node sends information about the duplex mode supported by the second communication node or information related to the duplex mode supported by the second communication node to the first communication node. Herein, the information related to the supported duplex mode at least includes: bandwidth information, and/or cache information, and/or maximum rate information and/or version information.

Before that, the method provided by the embodiment of the present invention further includes the following step that:
the first communication node acquires network load or channel state information; or
the second communication node sends duplex mode adjustment request information to the first communication node.

If the first communication node acquires the network load or channel state information, the method further includes the following steps that: the duplex mode adjustment information sent by the first communication node is determined by the first communication node according to the network load or the channel state information, and specifically includes the following steps that:
if a network capacity acquired by the first communication node satisfies a demand or the channel state information does not satisfy a channel quality requirement, the first communication node sends duplex mode adjustment information of disabling a full-duplex mode to the second communication node; and
if the network capacity acquired by the first communication node does not satisfy the demand, the first communication node sends duplex mode adjustment information of enabling the full-duplex mode to the second communication node.

If the second communication node sends duplex mode adjustment request information to the first communication node, method further includes the following step that: the duplex mode adjustment information sent by the first communication node is determined by the first communication node according to the duplex mode adjustment request information, and specifically includes the following step that:
the second communication node sends the duplex mode adjustment request information to the first communication node, and the first communication node determines whether to send the duplex mode adjustment information to the second communication node according to a network situation.

FIG. 2 illustrates a structural diagram of a macro base station provided by the embodiment of the present invention. As illustrated in FIG. 2, a first sending unit 201 is arranged to: send duplex mode adjustment information to a second communication node,
herein the second communication node at least supports a full-duplex mode.

The first sending unit 201 is specifically arranged to: send the duplex mode adjustment information to the second communication node according to a duplex mode supported by the second communication node, such that the second communication node performs communication mode adjustment according to the received duplex mode adjustment information.

The macro base station further includes an acquisition unit 202 and a first receiving unit 203, herein,
the acquisition unit 202 is arranged to: acquire network load or channel state information; and
the first receiving unit 203 is arranged to: receive duplex mode adjustment request information sent by the second communication node.

The macro base station further includes a judgment unit 204 arranged to: if an acquired network capacity satisfies a demand or channel state information does not satisfy a channel quality requirement, send duplex mode adjustment information of disabling a full-duplex mode to the second communication node; and
if the acquired network capacity does not satisfy the demand, send duplex mode adjustment information of enabling the full-duplex mode to the second communication node.

The duplex mode adjustment request information sent by the second communication node is received, whether to send the duplex mode adjustment information to the second communication node is determined according to a network situation.

The receiving unit 203 is further arranged to: receive information about the duplex mode supported by the second communication node or information related to the duplex mode supported by the second communication node.

The duplex mode adjustment information includes: enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

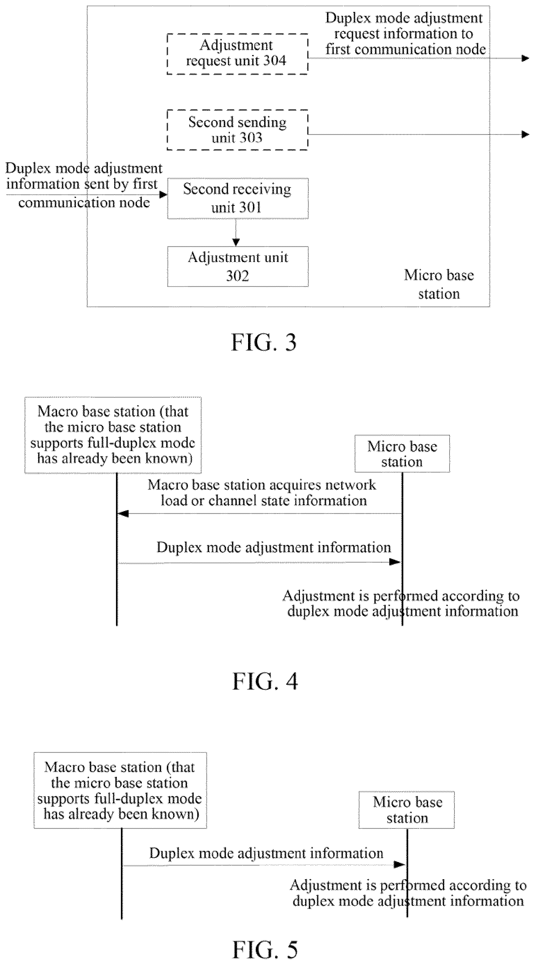

FIG. 3 illustrates a structural diagram of a micro base station provided by the embodiment of the present invention. As illustrated in FIG. 3, the micro base station includes: a second receiving unit 301 and an adjustment unit 302, herein,
the second receiving unit 301 is arranged to: receive duplex mode adjustment information sent by a first communication node; and
the adjustment unit 302 is arranged to: perform communication mode adjustment according to the received duplex mode adjustment information,
herein the duplex mode at least includes a full-duplex mode.

The micro base station provided by the embodiment of the present invention further includes a second sending unit 303 arranged to: send information about the duplex mode supported by the micro base station or information related to the duplex mode supported by the micro base station to the first communication node, such that the first communication node sends the duplex mode adjustment information to the micro base station according to the duplex mode supported by the micro base station.

The micro base station provided by the embodiment of the present invention further includes an adjustment request unit 304 arranged to: send duplex mode adjustment request information to the first communication node, such that the first communication node determines whether to send the duplex mode adjustment information to the micro base station according to the duplex mode supported by the micro base station.

The embodiment of the present invention further discloses the following technical solution:

A method for adjusting a communication mode includes:
a first communication node sending duplex mode adjustment information to a second communication node,
herein the second communication node at least supports a full-duplex mode.

Alternatively, the step of the first communication node sending the duplex mode adjustment information to the second communication node includes:
the first communication sending the duplex mode adjustment information to the second communication node according to a duplex mode supported by the second communication node, such that the second communication node performs communication mode adjustment according to the received duplex mode adjustment information.

Alternatively, before the step of the first communication node sending the duplex mode adjustment information to the second communication node, the method further includes:
the second communication node notifying the first communication node about information about the duplex mode supported by the second communication node or information related to the duplex mode supported by the second communication node.

Alternatively, before the step of the first communication node sending the duplex mode adjustment information to the second communication node, the method further includes:
the first communication node acquiring network load or channel state information; or
the first communication node receiving duplex mode adjustment request information sent by the second communication node.

Alternatively, if the first communication node acquires the network load or channel state information, the step of the first communication node sending the duplex mode adjustment information to the second communication node includes:
if a network capacity acquired by the first communication node satisfies a demand or the channel state information does not satisfy a channel quality requirement, the first communication node sending duplex mode adjustment information of disabling a full-duplex mode to the second communication node; and
if the network capacity acquired by the first communication node does not satisfy the demand, the first communication node sending duplex mode adjustment information of enabling the full-duplex mode to the second communication node.

Alternatively, if the second communication node sends duplex mode adjustment request information to the first communication node, the step of the first communication node sending the duplex mode adjustment information to the second communication node includes:
the second communication node sending the duplex mode adjustment request information to the first communication node, and the first communication node determining whether to send the duplex mode adjustment information to the second communication node according to a network situation.

Alternatively, the information related to the duplex mode supported by the second communication node includes:
bandwidth information, and/or cache information, and/or maximum rate information and/or version information.

Alternatively, the duplex mode adjustment information includes:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

Alternatively, the duplex mode adjustment information includes: enabling/disabling the full-duplex mode,
herein enabling/disabling the full-duplex mode includes: enabling/disabling the full-duplex mode on partial resources.

Alternatively, the duplex mode adjustment information includes: indicating a working time-frequency resource of the full-duplex mode of the second communication node,
herein the working time-frequency resource includes: location of working time-frequency resource and/or period of working time-frequency.

Alternatively, the duplex mode adjustment information includes: indicating a sub-working mode of the full-duplex mode supported by the second communication node,
herein the sub-working mode includes:
the second communication node receiving data sent by the first communication node and simultaneously sending data to a third communication node; or
the second communication node receiving data sent by a third communication node and simultaneously sending data to the first communication node,
herein the third communication node is a node which establishes a connection with the second communication node.

A method for adjusting a communication mode includes:
a second communication node receiving duplex mode adjustment information sent by a first communication node; and
the second communication node performing communication mode adjustment according to the received duplex mode adjustment information,
herein the second communication node supports a full-duplex mode.

Alternatively, before the step of the second communication node receiving the duplex mode adjustment information sent by the first communication node, the method further includes: the second communication node sending information about the duplex mode supported by the second communication node or information related to the duplex mode supported by the second communication node to the first communication node.

Alternatively, before the step of the second communication node receiving the duplex mode adjustment information sent by the first communication node, the method further includes:
the second communication node sending duplex mode adjustment request information to the first communication node.

Alternatively, the method further includes: the second communication node receiving duplex mode adjustment information of disabling a full-duplex mode or duplex mode adjustment information of enabling the full-duplex mode, which is sent by the first communication node.

Alternatively, the method further includes: the first communication node determining whether to send the duplex mode adjustment information to the second communication node according to the received duplex mode adjustment request information and a network situation.

Alternatively, the information related to the duplex mode supported by the second communication node includes: bandwidth information, and/or cache information, and/or maximum rate information and/or version information.

Alternatively, the duplex mode adjustment information includes:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

Alternatively, the duplex mode adjustment information includes: enabling/disabling the full-duplex mode,
herein enabling/disabling the full-duplex mode includes: enabling/disabling the full-duplex mode on partial resources.

Alternatively, the duplex mode adjustment information includes: indicating a working time-frequency resource of the full-duplex mode of the second communication node,
herein the working time-frequency resource includes: location of working time-frequency resource and/or period of working time-frequency.

Alternatively, the duplex mode adjustment information includes: indicating a sub-working mode of the full-duplex mode supported by the second communication node,
herein the sub-working mode includes:
the second communication node receiving data sent by the first communication node and simultaneously sending data to a third communication node; or
the second communication node receiving data sent by a third communication node and simultaneously sending data to the first communication node,
herein the third communication node is a node which establishes a connection with the second communication node.

A macro base station includes a first sending unit, herein,
the first sending unit is arranged to: send duplex mode adjustment information to a second communication node,
herein the second communication node at least supports a full-duplex mode.

Alternatively, the first sending unit is arranged to send the duplex mode adjustment information to the second communication node according to the following mode:
sending the duplex mode adjustment information to the second communication node according to a duplex mode supported by the second communication node, such that the second communication node performs communication mode adjustment according to the received duplex mode adjustment information.

Alternatively, the macro base station further includes an acquisition unit and a judgment unit, herein,
the acquisition unit is arranged to: acquire network load or channel state information; and
the judgment unit is arranged to: judge whether a network capacity and the channel state information acquired by the acquisition unit satisfy a demand or a channel quality requirement; if the acquired network capacity satisfies the demand or the channel state information does not satisfy the channel quality requirement, notify the first sending unit to send duplex mode adjustment information of disabling a full-duplex mode to the second communication node; and if the acquired network capacity does not satisfy the demand, notify the first sending unit to send duplex mode adjustment information of enabling the full-duplex mode to the second communication node.

Alternatively, the receiving unit is further arranged to: receive information about the duplex mode supported by the second communication node or information related to the duplex mode supported by the second communication node, which is sent by the second communication node.

Alternatively, the macro base station further comprises the receiving unit, further arranged to: receive duplex mode adjustment request information sent by the second communication node; and
the first sending unit is further arranged to: after the first receiving unit receives the duplex mode adjustment request information sent by the second communication node, determine whether to send the duplex mode adjustment information to the second communication node according to a network situation.

Alternatively, the duplex mode adjustment information includes:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

A micro base station includes a second receiving unit and an adjustment unit, herein,
the second receiving unit is arranged to: receive duplex mode adjustment information sent by a first communication node; and
the adjustment unit is arranged to: perform communication mode adjustment according to the duplex mode adjustment information received by the second receiving unit,
herein the duplex mode at least includes a full-duplex mode.

Alternatively, the micro base station further includes a second sending unit, herein,
the second sending unit is arranged to: send information about the duplex mode supported by the micro base station or information related to the duplex mode supported by the micro base station to the first communication node, such that the first communication node sends the duplex mode adjustment information to the micro base station according to the duplex mode supported by the micro base station.

Alternatively, the micro base station further includes an adjustment request unit, herein,
the adjustment request unit is arranged to: send duplex mode adjustment request information to the first communication node, such that the first communication node determines whether to send the duplex mode adjustment information to the micro base station according to the duplex mode supported by the micro base station.

The present invention will be clearly described below in detail through specific embodiment on a macro base station side, supposing that the first communication node is a macro base station and the second communication node is a micro base station. However, the embodiments do not limit the protection scope of the present invention.

FIG. 4 illustrates a flowchart of methods provided by embodiment 1 to embodiment 4. As illustrated in FIG. 4, a macro base station acquires network load or channel state information, and sends duplex mode adjustment information to a micro base station according to the network load or the channel state information.

### Embodiment 1

A macro base station has already known that a micro base station supports a full-duplex mode. Alternatively, the macro base station has already known information related to a duplex mode supported by the micro base station, e.g., bandwidth information, and/or cache information, and/or maximum rate information, and/or version information, etc.

The macro base station acquires network load or channel state information. When a network capacity satisfies a demand (a network capacity demand is satisfied) or the current channel state cannot satisfy a transmission demand (channel transmission quality is relatively poor), the macro base station sends duplex mode adjustment information to the micro base station according to the duplex mode supported by the micro base station to indicate the micro base station to disable the full-duplex mode.

After the micro base station receives the duplex mode adjustment information, the micro base station disables the full-duplex mode according to the duplex mode adjustment information or switches from the full-duplex mode to a time-division duplex mode and/or a frequency-division duplex mode.

### Embodiment 2

A macro base station has already known that a micro base station supports a full-duplex mode. Alternatively, the macro base station has already known information related to a supported duplex mode supported by the micro base station, e.g., bandwidth information, and/or cache information, and/or maximum rate information, and/or version information, etc.

The macro base station acquires network load or channel state information. If a network capacity satisfies a demand (a network capacity demand is satisfied) or the current channel state cannot satisfy a transmission demand (channel transmission quality is relatively poor), the macro base station sends duplex mode adjustment information to the micro base station according to the duplex mode supported by the micro base station to indicate the micro base station to disable the full-duplex mode on partial resources. By taking an LTE frame structure as an example, the full-duplex mode on a subframe 1 is disabled and the full-duplex mode on partial working bands, e.g., sub-band 1, may also be disabled.

After the micro base station receives the duplex mode adjustment information, the micro base station disables the full-duplex mode on corresponding resources according to the received duplex mode adjustment information.

### Embodiment 3

A macro base station has already known that a micro base station supports a full-duplex mode. Alternatively, the macro base station has already known information related to a duplex mode supported by the micro base station, e.g., bandwidth information, and/or cache information, and/or maximum rate information, and/or version information, etc.

If a network capacity acquired by the macro base station does not satisfy a demand, the macro base station sends duplex mode adjustment information to the micro base station according to the duplex mode supported by the micro base station to indicate the micro base station to enable the full-duplex mode.

The micro base station enables the full-duplex mode according to the received duplex mode adjustment information. For example, the micro base station switches from a time-division duplex mode or a frequency-division duplex mode to the full-duplex mode.

### Embodiment 4

A macro base station has already known that a micro base station supports a full-duplex mode. Alternatively, the macro base station has already known information related to a duplex mode supported by the micro base station, e.g., bandwidth information, and/or cache information, and/or maximum rate information, and/or version information, etc.

If a network capacity acquired by the macro base station does not satisfy a demand, the macro base station sends duplex mode adjustment information to the micro base station according to the duplex mode supported by the micro base station to indicate the micro base station to enable the full-duplex mode on partial resources. By taking an LTE frame structure as an example, the full-duplex mode on subframe 1 is enabled and the full-duplex mode on partial working bands, e.g., sub-band 1, may also be enabled.

After the micro base station receives the duplex mode adjustment information, the micro base station enables the full-duplex mode on corresponding resources according to the received duplex mode adjustment information.

FIG. 5 illustrates a flowchart of methods provided by embodiment 5 to embodiment 9. As illustrated in FIG. 5, a macro base station directly sends duplex mode adjustment information to a micro base station.

### Embodiment 5

A macro base station has already known that a micro base station supports a full-duplex mode. Alternatively, the macro base station has already known information related to a supported duplex mode supported by the micro base station, e.g., bandwidth information, and/or cache information, and/or maximum rate information, and/or version information, etc.

The macro base station sends duplex mode adjustment information to the micro base station according to the duplex mode supported by the micro base station to indicate working time-frequency resources of the full-duplex mode supported by the micro base station, i.e., indicate time-frequency resources on which the micro base station works in the full-duplex mode. By taking an LTE frame structure as an example, the macro base station indicates the micro base station to work on subframe 1, subframe 3, subframe 5, subframe 7 and subframe 9 (a period is 2) in the full-duplex mode.

The micro base station works as indicated on corresponding subframes in the designated duplex mode according to the received duplex mode adjustment information.

### Embodiment 6

A macro base station has already known that a micro base station supports a full-duplex mode. Alternatively, the macro base station has already known information related to a supported duplex mode supported by the micro base station, e.g., bandwidth information, and/or cache information, and/or maximum rate information, and/or version information, etc.

The macro base station sends duplex mode adjustment information to the micro base station according to the duplex mode supported by the micro base station to indicate working time-frequency resources of the full-duplex mode supported by the micro base station, i.e., indicate time-frequency resources on which the micro base station works in the full-duplex mode. By taking an LTE frame structure as an example, the macro base station indicates the micro base station to work on subframes 1-10 (non-periodically) in the full-duplex mode.

The micro base station works as indicated on corresponding subframes in the designated duplex mode according to the received duplex mode adjustment information.

### Embodiment 7

A macro base station has already known that a micro base station supports a full-duplex mode. Alternatively, the macro base station has already known information related to a supported duplex mode supported by the micro base station, e.g., bandwidth information, and/or cache information, and/or maximum rate information, and/or version information, etc.

The macro base station sends duplex mode adjustment information to the micro base station according to the duplex mode supported by the micro base station to indicate a sub-working mode of the full-duplex mode supported by the micro base station, herein the sub-working mode is that the micro base station receives data sent by the macro base station and simultaneously sends data to subordinate terminals (terminals which establish a connection with the micro base station).

The micro base station works as indicated on corresponding subframes in the designated duplex mode according to the received duplex mode adjustment information.

### Embodiment 8

A macro base station has already known that a micro base station supports a full-duplex mode. Alternatively, the macro base station has already known information related to a supported duplex mode supported by the micro base station, e.g., bandwidth information, and/or cache information, and/or maximum rate information, and/or version information, etc.

The macro base station sends duplex mode adjustment information to the micro base station according to the duplex mode supported by the micro base station to indicate a sub-working mode of the full-duplex mode supported by the micro base station, herein the sub-working mode is that the micro base station receives data sent by subordinate terminals and simultaneously sends data to the macro base station.

The micro base station works as indicated on corresponding subframes in the designated duplex mode according to the received duplex mode adjustment information.

### Embodiment 9

A macro base station has already known that a micro base station supports a full-duplex mode. Alternatively, the macro base station has already known information related to a supported duplex mode supported by the micro base station, e.g., bandwidth information, and/or cache information, and/or maximum rate information, and/or version information, etc.

The macro base station sends duplex mode adjustment information to the micro base station according to the duplex mode supported by the micro base station to indicate a resource location that a second communication node receives a control channel related to the full-duplex mode. By taking an LTE frame structure as an example, the macro base station indicates the micro base station to try to receive a control channel related to the full-duplex mode on subframe 1.

The micro base station works according to the received duplex mode adjustment information.

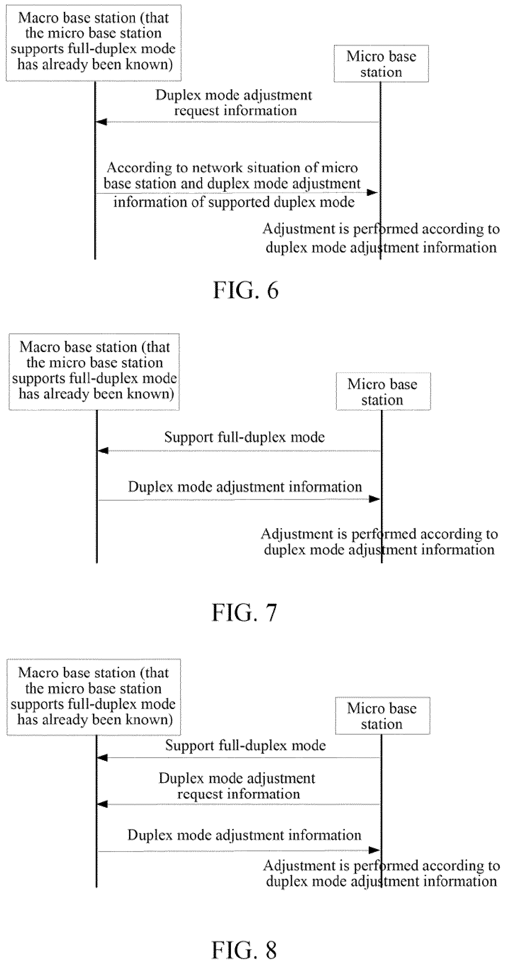

FIG. 6 illustrates a flowchart of a method provided by embodiment 10. As illustrated in FIG. 6, a macro base station sends duplex mode adjustment information to a micro base station according to a duplex mode supported by the micro base station, and sends duplex mode adjustment information to the micro base station in combination with a network situation of the micro base station and the duplex mode supported by the micro base station.

### Embodiment 10

A macro base station has already known that a micro base station supports a full-duplex mode. Alternatively, the macro base station has already known information related to a supported duplex mode supported by the micro base station, e.g., bandwidth information, and/or cache information, and/or maximum rate information, and/or version information, etc.

The macro base station sends duplex mode adjustment information to the micro base station according to the duplex mode supported by the micro base station, and sends the duplex mode adjustment information to the micro base station in combination with a network situation of the micro base station and the duplex mode supported by the micro base station. Generally, the network situation refers to service priority, network resource and channel transmission quality in a network. For example, when the network resource is limited, the full-duplex mode of subframes with a higher service priority is enabled according to the service priority.

The micro base station works according to the received duplex mode adjustment information.

The present invention will be clearly described below in detail through specific embodiments on a micro base station side, still supposing that the first communication node is a macro base station and the second communication node is a micro base station. However, the embodiments do not limit the protection scope of the present invention.

FIG. 7 illustrates a flowchart of methods provided by embodiment 11 to embodiment 19. As illustrated in FIG. 7, a micro base station sends information about a full-duplex mode supported by the micro base station to a macro base station, and the micro base station performs communication mode adjustment according to received duplex mode adjustment information sent by the macro base station.

### Embodiment 11

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station. For example, the duplex mode adjustment information is disabling a full-duplex mode. For example, the duplex mode is switched from the full-duplex mode to a time-division duplex mode and/or a frequency-division duplex mode.

### Embodiment 12

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station. For example, the duplex mode adjustment information is indicating the micro base station to disable the full-duplex mode on partial resources. By taking an LTE frame structure as an example, the full-duplex mode on subframe 1 is disabled, and the full-duplex mode on partial working bands, e.g., sub-band 1, may also be disabled.

### Embodiment 13

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station, and the duplex mode adjustment information is enabling the full-duplex mode. For example, the duplex mode is switched from a time-division duplex mode or a frequency-division duplex mode to the full-duplex mode.

### Embodiment 14

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station, and the duplex mode adjustment information is indicating the micro base station to enable the full-duplex mode on partial resources. By taking an LTE frame structure as an example, the full-duplex mode on subframe 1 is enabled, and the full-duplex mode on partial working bands, e.g., sub-band 1, may also be enabled.

### Embodiment 15

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station, and the duplex mode adjustment information is indicating working time-frequency resources of the full-duplex mode supported by the micro base station, i.e., indicating time-frequency resources on which the micro base station works in the full-duplex mode. By taking an LTE frame structure as an example, the macro base station indicates the micro base station to work on subframe 1, sub frame 3, subframe 5, subframe 7 and subframe 9 (a period is 2) in the full-duplex mode.

### Embodiment 16

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station, and the duplex mode adjustment information is indicating working time-frequency resources of the full-duplex mode supported by the micro base station, i.e., indicating time-frequency resources on which the micro base station works in the full-duplex mode. By taking an LTE frame structure as an example, the macro base station indicates the micro base station to work on subframes 1∼10 (non-periodically) in the full-duplex mode.

### Embodiment 17

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station, and the duplex mode adjustment information is indicating a sub-working mode of the full-duplex mode supported by the micro base station, herein the sub-working mode is that the micro base station receives data sent by the macro base station and simultaneously sends data to subordinate terminals (terminals which establish a connection with the micro base station).

### Embodiment 18

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station, and the duplex mode adjustment information is indicating a sub-working mode of the full-duplex mode supported by the micro base station, herein the sub-working mode is that the micro base station receives data sent by subordinate terminals and simultaneously sends data to the macro base station.

### Embodiment 19

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station performs communication mode adjustment according to received duplex mode adjustment information sent by the macro base station, and the duplex mode adjustment information is indicating a resource location that a second communication node receives a control channel related to the full-duplex mode. By taking an LTE frame structure as an example, the macro base station indicates the micro base station to try to receive a control channel related to the full-duplex mode on subframe 1.

FIG. 8 illustrates a flowchart of a method provided by embodiment 20. As illustrated in FIG. 8, a difference from embodiments 11-19 lies in that a micro base station further sends duplex mode adjustment request information to a macro base station in addition to information about a full-duplex mode supported by the micro base station.

### Embodiment 20

A micro base station sends information about a full-duplex mode supported by the micro base station to a macro base station. Alternatively, the micro base station sends information related to a duplex mode supported by the micro base station to the macro base station, e.g., bandwidth information, and/or cache information, and/or maximum rate information, and/or version information, etc., and herein the supported duplex mode at least includes a full-duplex mode.

The micro base station sends duplex mode adjustment request information to the macro base station.

The micro base station performs communication mode adjustment according to received duplex mode adjustment information sent by the macro base station.

The embodiment of the present invention further discloses a computer program, including program instructions, which, when executed by a macro base station, enable the macro base station to be capable of executing any one of the methods for adjusting the communication mode.

The embodiment of the present invention further discloses a carrier carrying the computer program.

The embodiment of the present invention further discloses a computer program, including program instructions, which, when executed by a micro base station, enable the micro base station to be capable of executing any one of the methods for adjusting the communication mode.

The embodiment of the present invention further discloses a carrier carrying the computer program.

Although the implementation modes disclosed by the present application are as described above, the contents are just implementation modes which are adopted in order to facilitate the understanding about the present application and are not used for limiting the present application, e.g., the specific implementation method in the implementation modes of the present invention. One skilled in the art may make any modifications and variations to the implementation modes and details without departing from the spirit and scope disclosed by the present application. However, the patent protection scope of the present application should be still subjected to the scope defined by the attached claims.

### Industrial Applicability

According to the technical solution provided by the present invention, by sending the duplex mode adjustment information to the second communication node, the influence on the system flexibility for a reason that the second communication node enables a full-duplex mode at all times is avoided, the power consumption caused by the full-duplex mode to the second communication node is reduced and the burden of subordinate terminals of the second communication node is decreased. Therefore, the present invention has very strong industrial applicability.

## Claims

1. A method for adjusting a communication mode, comprising:
a first communication node sending duplex mode adjustment information to a second communication node,
wherein the second communication node at least supports a full-duplex mode.

2. The method for adjusting the communication mode according to claim 1, wherein the step of the first communication node sending the duplex mode adjustment information to the second communication node comprises:
the first communication sending the duplex mode adjustment information to the second communication node according to a duplex mode supported by the second communication node, such that the second communication node performs a communication mode adjustment according to the received duplex mode adjustment information.

3. The method for adjusting the communication mode according to claim 1 or 2, wherein before the step of the first communication node sending the duplex mode adjustment information to the second communication node, the method further comprises:
the second communication node notifying the first communication node about information about the duplex mode supported by the second communication node or information related to the duplex mode supported by the second communication node.

4. The method for adjusting the communication mode according to claim 1 or 2, wherein before the step of the first communication node sending the duplex mode adjustment information to the second communication node, the method further comprises:
the first communication node acquiring network load or channel state information; or
the first communication node receiving duplex mode adjustment request information sent by the second communication node.

5. The method for adjusting the communication mode according to claim 4, wherein if the first communication node acquires the network load or channel state information, the step of the first communication node sending the duplex mode adjustment information to the second communication node comprises:
if a network capacity acquired by the first communication node satisfies a demand or the channel state information does not satisfy a channel quality requirement, the first communication node sending duplex mode adjustment information of disabling a full-duplex mode to the second communication node; and
if the network capacity acquired by the first communication node does not satisfy the demand, the first communication node sending duplex mode adjustment information of enabling the full-duplex mode to the second communication node.

6. The method for adjusting the communication mode according to claim 4, wherein if the second communication node sends duplex mode adjustment request information to the first communication node, the step of the first communication node sending the duplex mode adjustment information to the second communication node comprises:
the second communication node sending the duplex mode adjustment request information to the first communication node, and the first communication node determining whether to send the duplex mode adjustment information to the second communication node according to a network situation.

7. The method for adjusting the communication mode according to claim 3, wherein the information related to the duplex mode supported by the second communication node comprises:
bandwidth information, and/or cache information, and/or maximum rate information and/or version information.

8. The method for adjusting the communication mode according to any one of claims 1-6, wherein the duplex mode adjustment information comprises:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

9. The method for adjusting the communication mode according to claim 8, wherein the duplex mode adjustment information comprises: enabling/disabling the full-duplex mode,
wherein enabling/disabling the full-duplex mode comprises: enabling/disabling the full-duplex mode on partial resources.

10. The method for adjusting the communication mode according to claim 8, wherein the duplex mode adjustment information comprises: indicating a working time-frequency resource of the full-duplex mode of the second communication node,
wherein the working time-frequency resource comprises: location of working time-frequency resource and/or period of working time-frequency.

11. The method for adjusting the communication mode according to claim 8, wherein the duplex mode adjustment information comprises: indicating a sub-working mode of the full-duplex mode of the second communication node,
wherein the sub-working mode comprises:
the second communication node receiving data sent by the first communication node and simultaneously sending data to a third communication node; or
the second communication node receiving data sent by a third communication node and simultaneously sending data to the first communication node,
wherein the third communication node is a node which establishes a connection with the second communication node.

12. A method for adjusting a communication mode, comprising:
a second communication node receiving duplex mode adjustment information sent by a first communication node; and
the second communication node performing a communication mode adjustment according to the received duplex mode adjustment information,
wherein the second communication node supports a full-duplex mode.

13. The method for adjusting the communication mode according to claim 12, wherein before the step of the second communication node receiving the duplex mode adjustment information sent by the first communication node, the method further comprises: the second communication node sending information about a duplex mode supported by the second communication node or information related to the duplex mode supported by the second communication node to the first communication node.

14. The method for adjusting the communication mode according to claim 12, wherein before the step of the second communication node receiving the duplex mode adjustment information sent by the first communication node, the method further comprises:
the second communication node sending duplex mode adjustment request information to the first communication node.

15. The method for adjusting the communication mode according to any one of claims 12-14, wherein the method further comprises: the second communication node receiving duplex mode adjustment information of disabling a full-duplex mode or duplex mode adjustment information of enabling the full-duplex mode, which is sent by the first communication node.

16. The method for adjusting the communication mode according to 14, wherein the method further comprises: the first communication node determining whether to send the duplex mode adjustment information to the second communication node according to the received duplex mode adjustment request information and a network situation.

17. The method for adjusting the communication mode according to 13, wherein the information related to the duplex mode supported by the second communication node comprises: bandwidth information, and/or cache information, and/or maximum rate information and/or version information.

18. The method for adjusting the communication mode according to any one of claims 12-17, wherein the duplex mode adjustment information comprises:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

19. The method for adjusting the communication mode according to claim 18, wherein the duplex mode adjustment information comprises: enabling/disabling the full-duplex mode,
wherein enabling/disabling the full-duplex mode comprises: enabling/disabling the full-duplex mode on partial resources.

20. The method for adjusting the communication mode according to claim 18, wherein the duplex mode adjustment information comprises: indicating a working time-frequency resource of the full-duplex mode of the second communication node,
wherein the working time-frequency resource comprises: location of working time-frequency resource and/or period of working time-frequency.

21. The method for adjusting the communication mode according to claim 18, wherein the duplex mode adjustment information comprises: indicating a sub-working mode of the full-duplex mode of the second communication node,
wherein the sub-working mode comprises:
the second communication node receiving data sent by the first communication node and simultaneously sending data to a third communication node; or
the second communication node receiving data sent by a third communication node and simultaneously sending data to the first communication node,
wherein the third communication node is a node which establishes a connection with the second communication node.

22. A macro base station, comprising a first sending unit, wherein
the first sending unit is arranged to: send duplex mode adjustment information to a second communication node,
wherein the second communication node at least supports a full-duplex mode.

23. The macro base station according to claim 22, wherein the first sending unit is arranged to send the duplex mode adjustment information to the second communication node according to the following mode:
sending the duplex mode adjustment information to the second communication node according to a duplex mode supported by the second communication node, such that the second communication node performs a communication mode adjustment according to the received duplex mode adjustment information.

24. The macro base station according to claim 22 or 23, wherein the macro base station further comprises an acquisition unit and a judgment unit, wherein
the acquisition unit is arranged to: acquire network load or channel state information; and
the judgment unit is arranged to: judge whether a network capacity and the channel state information acquired by the acquisition unit satisfy a demand or a channel quality requirement; if the acquired network capacity satisfies the demand or the channel state information does not satisfy the channel quality requirement, notify the first sending unit to send duplex mode adjustment information of disabling a full-duplex mode to the second communication node; and if the acquired network capacity does not satisfy the demand, notify the first sending unit to send duplex mode adjustment information of enabling the full-duplex mode to the second communication node.

25. The macro base station according to claim 22, 23 or 24, wherein the receiving unit is further arranged to: receive information about the duplex mode supported by the second communication node or information related to the duplex mode supported by the second communication node, which is sent by the second communication node.

26. The macro base station according to claim 22 or 23, wherein the macro base station further comprises a first receiving unit, and the receiving unit is further arranged to: receive duplex mode adjustment request information sent by the second communication node; and
the first sending unit is further arranged to: after the first receiving unit receives the duplex mode adjustment request information sent by the second communication node, determine whether to send the duplex mode adjustment information to the second communication node according to a network situation.

27. The macro base station according to any one of claims 22-26, wherein the duplex mode adjustment information comprises:
enabling/disabling the full-duplex mode or switching from the full-duplex mode to a time-division duplex mode and/or a frequency-division duplex mode; or
indicating a working time-frequency resource of the full-duplex mode of the second communication node; or
indicating a sub-working mode of the full-duplex mode of the second communication node; or
indicating a resource location that the second communication node receives a control channel related to the full-duplex mode.

28. A micro base station, comprising a second receiving unit and an adjustment unit, wherein
the second receiving unit is arranged to: receive duplex mode adjustment information sent by a first communication node; and
the adjustment unit is arranged to: perform a communication mode adjustment according to the duplex mode adjustment information received by the second receiving unit,
wherein the duplex mode at least comprises a full-duplex mode.

29. The micro base station according to claim 28, wherein the micro base station further comprises a second sending unit, wherein
the second sending unit is arranged to: send information about the duplex mode supported by the micro base station or information related to the duplex mode supported by the micro base station to the first communication node, such that the first communication node sends the duplex mode adjustment information to the micro base station according to the duplex mode supported by the micro base station.

30. The micro base station according to claim 29, wherein the micro base station further comprises an adjustment request unit, wherein
the adjustment request unit is arranged to: send duplex mode adjustment request information to the first communication node, such that the first communication node determines whether to send the duplex mode adjustment information to the micro base station according to the duplex mode supported by the micro base station.
